# EUROPEAN PATENT SPECIFICATION

(11) **EP 3 053 947 B1**
(45) Date of publication and mention of the grant of the patent: **22.11.2017**
(21) Application number: 16153143.9
(22) Date of filing: 28.01.2016
(51) Int. Cl.: C08J 9/00, C08J 9/16, C08J 9/224, C08J 9/232, C08J 9/236

(54) **A PROCESS FOR PRODUCING FOAM MOULDINGS**
VERFAHREN ZUR HERSTELLUNG VON SCHAUMFORMTEILEN
PROCÉDÉ DE PRODUCTION DE CORPS MOULÉS EN MOUSSE

(30) Priority: 06.02.2015 NL 2014258
(43) Date of publication of application: 10.08.2016
(73) Proprietor: SYNBRA TECHNOLOGY B.V., 4871 NM Etten-Leur (NL)
(72) Inventor: NOORDEGRAAF, Jan, 6602 ZX WIJCHEN (NL); RENSEN, Petrus Frederikus Maria, 6686 MH DOORNENBURG (NL); VAN DEN HOONAARD, Kenneth, 6601 JH WIJCHEN (NL); VAN CASTEREN, Walter, 5374 GA SCHAIJK (NL); DE JONG, Josephus Petrus Maria, 4812 LB BREDA (NL); EILERS, Gerardus Wilhelmus Jozef, 5706 BJ HELMOND (NL); VAN SAS, Joannes Chrysostomus, 4661 SG HALSTEREN (NL)
(74) Representative: Algemeen Octrooi- en Merkenbureau B.V.

(56) References cited:
- WO-A2-2012/151596
- DE-U1- 20 315 226
- US-A1- 2009 234 035

## Description

The present invention relates to a process for producing foam mouldings, as well as to foam mouldings.

The production of foam moulded parts according to international patent application WO2011133035 (corresponding to EP 2 561 013) in the name of the present applicant takes place by using a method in which the starting materials, which may have been pre-expanded, are confined in so-called steam chambers, in which further expansion of the polystyrene particles takes place. During this possible pre-foaming virgin EPS is for example treated under influence of steam, whereby the granules of expanded polystyrene are expanded. After such treatment the thus pre-foamed EPS can be further developed in a subsequent treatment, which is maturing, in particular storing the thus treated granules for a period of 4 to 48 hours. The final form occurs by treating the different starting materials in a steam mould or a steam treated mould. During the process the particles will adhere to each other and a compact structure is formed. Before the steam chambers or moulds are filled with a combination of starting materials, firstly a mixture of the desired EPS material is produced, whereby the desired composition is summarized in the dependent claims. After putting together the desired mixture, whereby the starting materials in particular are taken from silos. The containers in the form are filled and thereafter steam is led through. Due to the high temperature of the steam the present blowing agent will attempt to expand, and the EPS particles will fuse together due to the steam heating them to above the glass transition temperature en also due to the limited room in the form. The mould used here fore is provided with small openings through which the blowing agent and steam can pass.

According to the Dutch patent NL 1033719 in the name of the present applicant a method for the production of foamed moulded parts is disclosed wherein particles of polylactic acid are impregnated in a pressure vessel with a blowing agent, namely CO2 at a pressure of 20 bars for 5 hours. The accordingly obtained particles of polylactic acid are subsequently pre-foamed or pre-expanded by application of warm air (with a temperature of about 90 °C) for duration of 1 minute. The pre-foamed particles of polylactic acid have a density of approximately 60 g/l. Finally the pre-foamed particles of polylactic acid are coated in a fluidized bed reactor and after the coating of the pre-foamed polylactic acid particles the particles are once again impregnated with a blowing agent namely CO2 by treatment in a pressure vessel at 20 bar for a duration of 20 minutes. The once again impregnated particles of polylactic acid contain approximately 7% by mass of CO2. Subsequently the once again impregnated particles of polylactic acid are added to an industrial production unit for foamed moulded parts, wherein by application of steam further expansion and fusion from the pre-foamed particles of polylactic acid occurs to obtain a foamed moulded part, with a density of 60 g/l. According to the Dutch patent NL 1033719 it is also possible to place particles of polylactic acid after extrusion in a fluidized bed reactor to provide a coating, namely by application of a solution of 50% weight by mass of polyvinyl acetate. After coating the thus coated particles of polylactic acid are impregnated with a blowing agent, namely CO2, by treatment in a pressure vessel at a pressure of 20 bars for duration of 20 minutes. The impregnated particles of polylactic acid contain approximately 7% weight by mass of CO2 and a subsequently added to an industrial production unit for foamed moulded parts, wherein by application of steam expansion and fusion of the particles of polylactic acid takes place to obtain a foamed moulded part, with a density of 60 g/l. In both methods the impregnation of the blowing agent is an essential step.

EP 1 731 552 relates to insulating foamed material which is formed from expandable styrene polymer consisting of pigment-containing and pigment-free styrene polymer.

WO2014/027888 (in the name of the present applicant) relates to a particulate, expandable polymer that can be processed into a flame-retardant foam with a fine cellular structure and a low density and that contains a carbon-based material increasing the thermal insulation value to improve the thermal insulation value thereof, wherein the polymer particles contain carbon with a particle size of < 1 µm as the material increasing the thermal insulation value.

WO2014/157538 relates to a molded body of composite resin foam that comprises 100 parts by mass of an ethylene-vinyl acetate copolymer and 100-400 parts by mass of a polystyrene resin.

EP 0 732 357 relates to a process for the production of flame proofed polystyrene bead foams containing reclaim, which comprises coating comminuted recycled polystyrene foam with at least one flame proofing agent and fusing the coated pieces together with freshly produced, prefoamed polystyrene beads to give moldings.

US 2009/234035 relates to a process for making a foam structure, comprising: providing at least one alkenyl aromatic polymer, such as polystyrene and copolymers thereof and high-impact polystyrene and copolymers thereof; providing at least one bio-based or biodegradable polymer; providing at least one blend compatibilizer, such as maleated SEBS, SEBS, styrene-maleic anhydride copolymer, and styrene-methyl methacrylate copolymer; forming a blend by blending the at least one alkenyl aromatic polymer, at least one bio-based or biodegradable polymer, and at least one blend compatibilizer; extruding the blend to form an extrudate; and expanding the extrudate to produce the foam structure; thermoforming the foam structure to produce a thermoformed article. The bio-based or biodegradable polymer is selected from the group consisting of: polylactic acid and copolymers thereof, polyhydroxyalkanoate and copolymers thereof, and polybutylene succinate or copolymers thereof, polycaprolactone, polyvinyl alcohol and copolymers thereof, polysaccharides, cellulosic polymers and soy-based polymers.

DE 203 15 226 relates to an insulating foamed material which has been formed from expandable styrene polymer particles, namely from 10 to 90% by weight of pigmented styrene polymer particles and from 90 to 10% by weight of pigment-free styrene polymer particles, wherein the pigments of the pigment-containing styrene polymer particles are selected from among carbon black, metal oxides, metal powders, colour pigments and graphite and the pigment-containing styrene polymer particles contain graphite particles in a homogeneous distribution.

WO2012/151596 relates to expandable polymers or polymer granules of a polymer blend comprising a cellulose acetate butyrate (CAB) and a styrene polymer, wherein in the polymer blend at least one additional compatible polymer is present, for example polyurethane or polylactic acid, wherein cellulose acetate butyrate (CAB) and styrene together account for more than 80 % by weight of the total mass of the polymer blend.

Particle based expandable polystyrene (EPS) is not only used as a packaging material but also in construction elements, for example as panels in the housing industries. Specific properties are required for such panels with regard to amongst others heat insulation, sound insulation and fire resistance (fire retardancy).

Over the past years interest in polylactic acid, or PLA, as a renewable biologically degradable material for a broad range of applications has grown tremendously. In developing a foamed moulded product based on an expanded or foamed polylactic acid attention is now also being paid to recycling in connection with the constantly increasing volumes of waste and the growing concern for the environment and recycling issues. In the literature it is often claimed that polylactic acid is not recyclable, and causes problems in particular if it is involved in the process chains of other polymers in the form of contamination.

Foamed moulded parts based on particulate expandable polystyrene (EPS) and methods for its production are known per se from European patent EP 1 486 530, U.S. Pat. No. 6,465,533, EP 1 587 860, Canadian application CA 2 171 413, British application GB 2 449 353, International application WO 2009/155066, EP 0 235 831, JP 2 222 435 and US 2010/099782.

EPS, also called expandable polystyrene, is characteristic white plastic foam and consists of about 98% air and about 2% polystyrene. This material is also known as air-pop, polystyrene or Styrofoam. EPS has a variety of applications such as: packaging materials, material for horticultural trays and fish boxes, and insulation for buildings and installations.

PLA, also called polylactic acid is a polymer of lactic acid molecules. Lactic acid is a substance that is released during various biological processes, such as fermentation of carbohydrates. PLA was already 200 years ago synthesized in a laboratory, but finds its the way to industrial applications only for the last ten years. Polylactic acid is a collective term used for polymers based on polylactic acid monomers, in which the structure of the polylactic acid may vary according to the composition, from completely amorphous to semi-crystalline or crystalline. Polylactic acid can be produced from milk products or for example maize.

Lactic acid is the monomer of which polylactic acid is composed, and this monomer occurs in two stereoisomers, viz. L-lactic acid and D-lactic acid. So polylactic acid contains a certain proportion of L-lactic-acid monomers and a certain proportion of D-lactic-acid monomers. The ratio between the L- and D-lactic-acid monomers in polylactic acid determines its properties. This is also known as a D value or D-content, which represents the percentage of D-lactic-acid monomers in the polylactic acid. Polylactic acid that is at present commercially available has an L: D ratio of between 100:0 and 75:25; in other words, a D-content of between 0 and 25%, or between 0 and 0.25. When polylactic acid contains more than approximately 12% D-lactic acid it can no longer crystallise, and is hence completely amorphous. When the D-content is approximately 5%, it is referred to after processing as semi-crystalline polylactic acid. The crystallinity of the polylactic acid can be determined by means of differential scanning calorimetry (DSC). The term "semi-crystalline" is understood to mean that the polymer has arranged its polymer structure by crystallising. Thus it can be stated that the lower the D-content, the higher the crystallinity of the polylactic acid will become. The D-content is usually determined by using a known method, such as a so-called R-lactate determination using gas-liquid chromatography (GLC) after complete hydrolysis of the polymer. Another standard method is determination via optical rotation (measured in chloroform using a Jasco DIP-140 polarimeter at a wavelength of 589 nm).

In producing moulded products based on particulate expandable polylactic acid it is of the greatest importance that the fusion between the individual particles is sufficient to obtain a product that will not disintegrate into the individual particles under a slight load. The process conditions are also very important. In view of the limited thermal stability of polylactic acid in comparison with petrochemical or so called oil based polymers it is of the greatest importance that good fusion is realised even under mild process conditions.

Regarding bio based materials one could say there are in fact two basic reasons which are responsible for the shift from crude oil derivatives towards biological and renewable raw materials. The first reason is the reduction of fossil fuels and the expected decline in oil stocks (long-term continuity of supply), the second is climate change. Climate change is considered to be the main challenge of the society in the coming decades. The uncontrolled release of greenhouse gases has led to an increase in the average temperature of the earth and could lead to further consequences which have an influence on the way of life in many parts of the world. The use of renewable sources reduces this effect and has a significant environmental benefit.

A peer-reviewed LCA study by AkzoNobel Sustainable Systems has shown that bio based polymers such as EPLA foam (BioFoam, trademark of the present applicant) have a 40-50% lower CO₂ emissions during the entire production chain, compared with EPS foam.

At this moment (in 2015) the price for EPLA is much higher than EPS, for example due to the fact that i) the raw material price per kilogram of PLA is higher than that of EPS, ii) the specific gravity of moulded foam is 30 g/l for PLA foam compared to 20 g/l for EPS, and iii) additional process equipment is necessary for introducing the blowing agent into the mould.

An aspect of the present invention is to provide a process for producing bio based foam mouldings having acceptable mechanical properties.

Another aspect of the present invention is to provide a process for producing bio based foam mouldings wherein standard process equipment for manufacturing foam mouldings can be used.

Another aspect of the present invention is to provide a process for producing bio based foam mouldings resulting in foam mouldings which are high temperature resistant.

The present invention thus relates to a process for producing foam mouldings, comprising
a) providing a first amount of expandable foam particles;
b) providing a second amount of expandable foam particles;
c) preparing a physical mixture on basis of said first and second amount of foam particles;
d) introduction of the mixture of step c) into a mould and sintering under pressure and heat, wherein the chemical origin of the first amount of expandable foam particles differs from the chemical origin of the second amount of foam particles, said process further comprising the presence of a coating in said mixture before said introduction of said mixture into said mould, wherein said coating is used for obtaining a good adhesion between said expandable foam particles of step a) and said expandable foam particles of step b), wherein at least one of said expandable foam particles of step a) and said expandable foam particles of step b) is provided with said coating.

The first amount of expandable foam particles is preferably chosen from the group of oil based polymers, namely polystyrene (PS), polyphenylene oxides (PPOs), polypropylenes (PP), polyethylenes (PE), polyethylene terephthalate (PET), thermoplastic polyurethane (TPU) and blends thereof, especially PS/PE and PS/PPO blends.

The second amount of expandable foam particles is preferably chosen from the group of bio based polymers, namely polylactic acid (PLA), polybutyrate adipate terephthalate (PBAT), polyhydroxyalkanoates (PHA), polyhydroxybutyrate (PHB), cellulose, starch and blends thereof, especially PLA /starch and PLA/PBAT blends.

In specific embodiments additional components can be added, such as the usual processing aids, for example flame retardants, agents enhancing the insulating value, flow agents, release agents, anticoagulants and the like, which processing aids may or may not already be mixed with the starting materials. However, the use of additional blowing agent is preferably excluded.

It is preferred that the second amount of expandable foam particles is present in a range of 2 to 50 % by weight, especially 5 to 20 % by weight, preferably 10 to 15 % by weight, on basis of the total weight of the foam mouldings obtained after step d).

The present inventors found that for a good adhesion between the bio based polymers and the oil based polymers it is preferred to apply a coating. In a first embodiment the first amount of expandable foam particles is provided with the coating. In a second embodiment the second amount of expandable foam particles is provided with the coating. According to another embodiment the physical mixture on basis of the first and second amount of expandable foam particles is provided with the coating.

For sintering purposes according to step d) it is preferred to inject steam into the mould. In another embodiment of step d) hot air is injected into the mould.

In embodiment wherein a PLA/PBAT blend is used, the amount of PBAT is less than 75 % by weight, preferably less than 50% by weight, more preferably less than 25% by weight, calculated on the total weight of the PLA/PBAT blend. The present inventors found that the higher amount of PBAT in a PLA/PBAT blend the worse the encapsulation of the bio based polymers in the oil based polymers is.

The density of the second expandable foam particles is preferably in the range of 7 - 40 kg/m³.

The density of the first expandable foam particles is preferably in the range of 8 - 45 kg/m³.

According to a preferred embodiment of the present invention the first amount of expandable foam particles is EPS and the second amount of expandable foam particles is EPLA.

The EPLA has crystallinity in a preferred range of 20 to 100%, especially in a range of 30 and 40%.

The EPLA is a copolymer of PLA having a preferred D-content of 2-10%, especially 3-7%.

As mentioned above, it is preferred to apply a coating before the sintering step d) is carried out, wherein the coating is preferably selected from the group consisting of polyurethane, polyvinyl acetate, polyvinyl-acetate-based polymer, polyvinyl alcohol, polycaprolactone, polyester, polyester amide, protein-based material, polysaccharide, natural wax or grease and acrylate or one or more combinations thereof.

The amount of coating is preferably in a range of 0,5 and 15 % by weight, on basis of the weight of the second amount of expandable foam particles in the mixture prepared in step c).

The particles size of both the first amount of expandable foam particles and second amount of expandable foam particles is preferably in a range of 0,5 and 5 mm, preferably 0,5 and 3 mm.

The sintering according to step d) can be carried out when the pressure is in the range from 0.5 to 30 kg/cm².

In the present process for producing foam mouldings wherein the mixture of step c) is introduced in a mould and sintered under pressure and heat therein, the introduction of an additional blowing agent is excluded. The preferred embodiment of the application of a coating will result in a good adhesion between the oil based polymers and the bio based polymers. In addition, the present process for producing foam mouldings as recited in steps a)-d) also excludes the application of an extruder.

The present invention furthermore relates to foam mouldings obtained after carrying out the present method.

The composition of the foam mouldings is preferably based on a sintered, physical mixture of a first amount of expandable foam particles and a second amount of foam particles, wherein the chemical origin of the first amount of expandable foam particles differs from the chemical origin of the second amount of foam particles, wherein between the first and second amount of expandable foam particles a coating is present. The group of first amount of expandable foam particles and second amount of foam particles has been discussed above.

A preferred embodiment of foam mouldings according to the present invention comprises an EPS and EPLA, wherein EPLA is preferably present in a range of 3 to 50 % by weight, especially 5 to 20 % by weight, more preferably 10 to 15 % by weight, on basis of the total weight of the foam mouldings.

According to another embodiment it is possible to inject a mixture of the first amount of expandable foam particles and the second amount of foam particles into the cavity between two walls of a building. In such an embodiment a coating has to be present on either of the first amount of expandable foam particles or the second amount of foam particles. Once the cavity between two walls of a building has been filled with this mixture the fusion of both foam particles will start automatically thereby forming a closed structure of fused foam particles. Such a structure has heat insulation, sound insulation and moisture barrier properties.

The present invention will be further illustrated by way of some Figures and experiments,
Figure 1 is a photo of a foam moulding manufactured according to the present method.
Figure 2 is another photo of a foam moulding manufactured according to the present method.

The present inventors carried out several experiments. In the experiments not only the amount of EPLA in EPS was varied, but the coating, the type of the bio based polymer, the % D in the EPLA and the crystallinity of the EPLA as well. The experimental results have been shown in Table I and II. The process conditions in the mould are a temperature of 105 °C, residence time of 80 seconds and injection of steam.

Table I shows the raw materials and its properties. For example, Example 1 is an experiment starting with Styrex 1016R, i.e. a commercial oil based polymer of the Expandable Polystyrene EPS type, manufactured by Synbra Technology BV, and 1 wt.% of EPLA originating from Biofoam (trademark), manufactured by Synbra Technology BV.

Table II shows the physical and visual properties of the final moulding. Examples 1, 2, 3 and 4 demonstrate that the maximum amount of EPLA is about 5 wt.%. EPLA. The origin is recycled beads that have already been moulded before. Examples 5, 6 and 7 have been carried out with different types of EPLA provided with heat insulating enhancing additives like graphite, graphene and activated carbon, in an amount of 5 wt.% and demonstrate that the encapsulation of the EPLA in the EPS is not sufficient. The present inventors assume that this phenomenon is attributed to the physical disturbing effect of these additives on the crystallisation and this indicates that it will be required to use a lower D content of the bio based polymer. However, the present inventors do not want to be bound to this explanation. Examples 8 and 9 have been carried out with the addition of a coating, namely a PVAC based adhesive, Vinnapas 2501, manufactured by Wacker. These Examples 8 and 9 demonstrate a slight improvement with regards to the encapsulation of the EPLA in the EPS. Examples 10-15 have been carried out with another type of EPS, namely Neopor (trademark) (EPS) from BASF, and polyurethane based adhesive Epotal P100 ECO (trademark) from BASF. Examples 10-15 clearly demonstrate that acceptable mouldings can be obtained even at a high amount of EPLA, e.g. 30 wt.%. Examples 16-20 have been carried out with other types of bio based polymers showing that acceptable mouldings can be obtained as well. In the Examples the amount of coating, if any, is about 8 % by weight, on basis of the weight of the second amount of expandable foam particles in the final mixture.

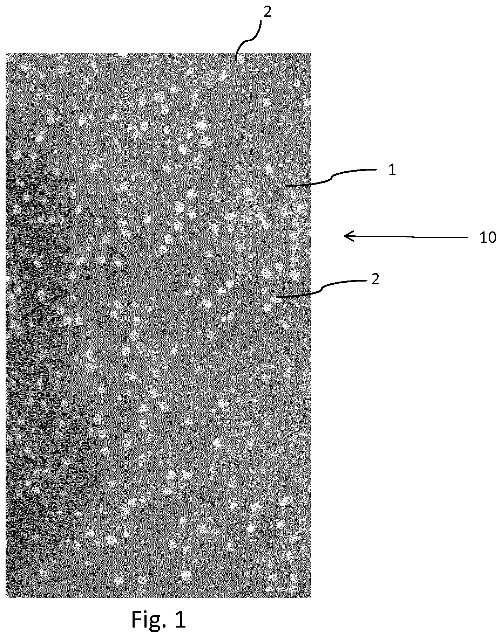

In Figure 1 moulding 10 comprises fused beads of EPS 1 and EPLA 2. Moulding 10 clear shows the individual starting foam particles of EPS 1 and EPLA 2. The EPLA foam particles are fully encapsulated in the EPS matrix. Moulding 10 shown in Figure 1 has been manufactured according to Example 13.

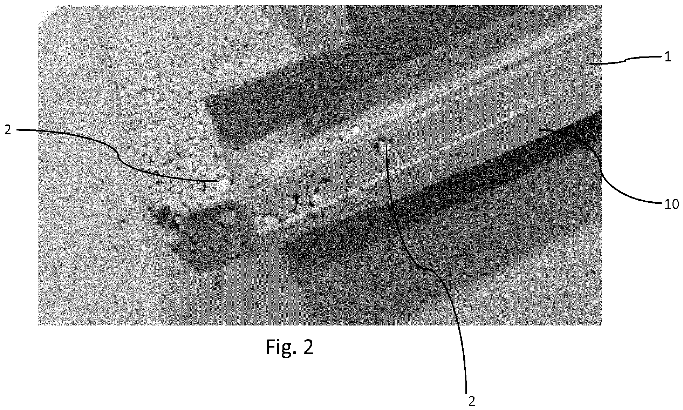

Figure 2 shows a moulding 10 comprising fused beads of EPS 1 and EPLA 2 but the encapsulation of the EPLA 2 in the EPS matrix shows somewhat shortcomings because the EPLA 2 particles are loosely enclosed by the EPS matrix. The present inventors assume that this effect can be attributed by an insufficient amount of coating in the mixture of starting materials. Moulding 10 shown in Figure 2 has been manufactured according to Example 8.

The mouldings thus manufactured can not only be used as a packaging material but also in construction elements, for example as panels in the housing industries. Specific properties are required for such panels with regard to amongst others heat insulation, sound insulation and fire resistance.

**Table I**

| Example No. | EPS | | | EPLA | | | | |
|---|---|---|---|---|---|---|---|---|
| | | | | | | % D in PLA polymer | | |
| | Type | | Density (g/l) | Addition EPLA (%) | | Density (g/l) | Crystalinity PLA | |
| 1 | Styx | 1016R | 20 | 1 | BioFoam milled package, white recycle | 30 | 5.50% | 28% |
| 2 | Styrex | 1018R | 20 | 3 | BioFoam milled package, white recycle | 30 | 5.50% | 28% |
| 3 | Styrex | 1016R | 20 | 5 | BioFoam milled package, white recycle | 30 | 5.50% | 28% |
| 4 | Styrex | 1016R | 20 | 10 | BioFoam milled package, green recycle | 30 | 5.50% | 28% |
| 5 | Styrex | 1016R | 20 | 5 | Biofoam, including graphite 5 µm average, L/D 10 | 18 | 5.40% | 25% |
| 6 | Styrex | 1016R | 20 | 5 | BioFoam, including graphite 5 µm average, L/D 10 | 18 | 5.40% | 25% |
| 7 | Styrex | 1016R | 20 | 5 | BioFoam, including graphene 0.2 µm thickness, L/D 10 | 18 | 5.40% | 25% |
| 8 | Styrex | 1016R | 20 | 5 | BioFoam, including active carbon kool 3 µm diameter | 18 | 6.00% | 20% |
| 9 | Styrex | 1016R | 20 | 5 | BloFoam, including active carbon 3 µm diameter | 17 | 5.40% | 30% |
| 10 | Neopor | 2400 | 30 | 10 | BioFoam including extra masterbatch Sukano green | 18 | 5.40% | 32% |
| 11 | Neopor | 2400 | 30 | 20 | BioFoam including extra masterbatch Sukano green | 30 | 5.40% | 29% |
| 12 | Neopor | 2400 | 20 | 30 | BioFoam including extra masterbatch Sukano green | 18 | 5.40% | 32% |
| 13 | Neopor | 2300 | 30 | 10 | BioFoam including extra masterbatch Sukano green | 18 | 5.40% | 32% |
| 14 | Neopor | 2300 | 30 | 20 | BioFoam including extra masterbatch Sukano green | 18 | 5.40% | 32% |
| 15 | Neopor | 2300 | 30 | 30 | BioFoam including extra masterbatch Sukano green | 18 | 5.40% | 32% |
| 16 | Neopor | 2300 | 30 | 5 | PIA/PBAT blends 25% PBAT | 30 | 5.40% | not measured |
| 17 | Neopor | 2300 | 30 | 10 | PIa/PBAT blends 50% PBAT | 30 | 5.40% | not measured |
| 18 | Neopor | 2300 | 30 | 10 | Pla/PBAT blends 75% PBAT | 30 | 5.40% | not measured |
| 19 | Neopor | 2300 | 30 | 10 | Cellulose | 40 | 5.40% | not measured |
| 20 | Neopor | 2300 | 30 | 10 | PLA 95% PHA 5% | 40 | 5.40% | not measured |

**Table II - Results**

| Example No. | EPLA | | |
|---|---|---|---|
| | End product | Glue type added | Remarks |
| 1 | ok | none | Milled package, damaged surface of beads |
| 2 | ok | none | Milled package, damaged surface of beads |
| 3 | reasonable | none | Milled package, damaged surface of beads |
| 4 | reasonable | none | Milled package, damaged surface of beads |
| 5 | strongly ingevallen | none | |
| 6 | strongly ingevellen | none | |
| 7 | strongly ingevallen | none | |
| 8 | strongly ingevallen | PVAC base | supplier additive Vinnapas 2501 Wacker |
| 9 | reasonable | PVAC base | supplier additive Vinnapas 2501 Wacker |
| 10 | ok | polyurethane, biodegradable | supplier BASF, Trademark Epotal P100 ECO |
| 11 | ok | polyurethane, biodegradable | supplier BASF, Trademaric Epotal P100 ECO |
| 12 | ok | polyurethane, biodegradable | supplier BASS, Trademark Epotal P100 ECO |
| 13 | ok | polyurethane, biodegradable | supplier BASF, Trademark Epotal P100 ECO |
| 14 | ok | polyurethane, biodegradable | supplier BASF, Trademark Epotal P100 ECO |
| 15 | reasonable | polyurethane, biodegradable | supplier BASF, Trademark Epotal P100 ECO |
| 16 | reasonable | polyurethane, biodegradable | Supplier additive Vinnapas 2501 Wacker |
| 17 | strongly ingevallen | polyurethane, biodegradable | Supplier BASF, Trademark Epotal P100 ECO, PBAT supplier BASF |
| 18 | strongly | polyurethane, biodegradable | supplier BASS, Trademark Epotal P100 ECO |
| 19 | reasonable | polyurethane, biodegradable | supplier BASF, Trademark Epotal P100 ECO |
| 20 | reasonable | polyurethane, biodegradable | supplier BASF, Trademark Epotal P100 ECO |

## Claims

1. A process for producing foam moldings, comprising
a) providing a first amount of expandable foam particles;
b) providing a second amount of expandable foam particles;
c) preparing a physical mixture on basis of said first and second amount of foam particles;
d) introduction of the mixture of step c) into a mold and sintering under pressure and heat, wherein the chemical origin of the first amount of expandable foam particles differs from the chemical origin of the second amount of foam particles, said process further comprising the presence of a coating in said mixture before said introduction of said mixture into said mold, wherein said coating is used for obtaining a good adhesion between said expandable foam particles of step a) and said expandable foam particles of step b), wherein at least one of said expandable foam particles of step a) and said expandable foam particles of step b) is provided with said coating.

2. A process according to claim 1, wherein said first amount of expandable foam particles is provided with said coating.

3. A process according to claim 1, wherein said second amount of expandable foam particles is provided with said coating.

4. A process according to claim 1, wherein said physical mixture on basis of said first and second amount of expandable foam particles is provided with said coating.

5. A process according to any one or more of the claims 1-4, wherein in step d) hot air is injected into the mold, or wherein in step d) steam is injected into the mold.

6. A process according to any one or more of the claims 1-5, wherein the first amount of expandable foam particles is chosen from the group of oil based polymers, namely polystyrene (PS), polyphenylene oxides (PPOs), polypropylenes (PP), polyethylenes (PE), polyethylene terephthalate (PET), thermoplastic polyurethane (TPU) and blends thereof, especially PS/PE and PS/PPO blends.

7. A process according to any one or more of the claims 1-5, wherein the second amount of expandable foam particles is chosen from the group of bio based polymers, namely polylactic acid (PLA), polybutyrate adipate terephthalate (PBAT), polyhydroxyalkanoates (PHA), polyhydroxybutyrate (PHB), cellulose, starch and blends thereof, especially PLA /starch and PLA/PBAT blends, wherein especially in a PLA/PBAT blend the amount of PBAT is less than 75 % by weight, preferably less than 50% by weight, more preferably less than 25% by weight, calculated on the total weight of said PLA/PBAT blend.

8. A process according to any one or more of the claims 1-7, wherein the density of the second expandable foam particles is in the range of 7 - 40 kg/m³ and the density of the first expandable foam particles is in the range of 8 - 45 kg/m³.

9. A process according to any one or more of the claims 1-8, wherein the second amount of expandable foam particles is present in a range of 2 to 50 % by weight, especially 5 to 20 % by weight, preferably 10 to 15 % by weight, on basis of the total weight of the foam moldings obtained after step d).

10. A process according to any one or more of the claims 1-9, wherein said first amount of expandable foam particles is EPS and said second amount of expandable foam particles is EPLA, wherein preferably said EPLA has crystallinity in a range of 20 to 100%, especially in a range of 30 and 40%, and wherein preferably said EPLA is a copolymer of PLA having a D-content of 2-10%, especially 3-7%.

11. A process to any one or more of the claims 1-10, wherein said coating is selected from the group consisting of polyurethane, polyvinyl acetate, polyvinyl-acetate-based polymer, polyvinyl alcohol, polycaprolactone, polyester, polyester amide, protein-based material, polysaccharide, natural wax or grease and acrylate or one or more combinations thereof, wherein preferably the amount of coating is in a range of 0,5 and 15 % by weight, on basis of the weight of said second amount of expandable foam particles in the mixture prepared in step c).

12. A process according to any one or more of the claims 1-11, wherein the particles size of both the first amount of expandable foam particles and second amount of expandable foam particles is in a range of 0,5 and 5 mm, preferably 0,5 and 3 mm.

13. A process according to any one or more of the claims 1-12, wherein no additional blowing agent is used in said step of sintering under pressure and heat.

14. Foam moldings obtained after carrying out the method according to any one or more of the preceding claims, wherein the composition of the foam moldings is based on a sintered, physical mixture of a first amount of expandable foam particles and a second amount of foam particles, wherein the chemical origin of the first amount of expandable foam particles differs from the chemical origin of the second amount of foam particles, wherein between said first and second amount of expandable foam particles a coating is present.

15. Foam moldings according to claim 14, wherein said first amount of expandable foam particles is EPS and said second amount of expandable foam particles is PLA, wherein PLA is preferably present in a range of 3 to 50 % by weight, especially 5 to 20 % by weight, more preferably 10 to 15 % by weight, on basis of the total weight of the foam moldings.

## Patentansprüche

1. Ein Verfahren zur Herstellung von Schaumstoffformteilen, welches das:
a) Bereitstellen einer ersten Menge an expandierbaren Schaumstoffteilchen,
b) Bereitstellen einer zweiten Menge an expandierbaren Schaumstoffteilchen,
c) Herstellen eines physikalischen Gemenges auf der Grundlage dieser ersten und zweiten Menge an Schaumstoffteilchen und
d) Füllen des Gemenges aus Stufe c) in eine Form und Sintern unter Druck und Hitze, wobei sich die chemische Herkunft der ersten Menge an expandierbaren Schaumstoffteilchen von der chemischen Herkunft der zweiten Menge an Schaumstoffteilchen unterscheidet, dieses Verfahren ferner das Vorhandensein eines Beschichtungsstoffs in diesem Gemenge vor dessen Füllen in die Form umfasst, wobei dieser Beschichtungsstoff verwendet wird, um eine gute Haftung zwischen diesen expandierbaren Schaumstoffteilchen aus Stufe a) und diesen expandierbaren Schaumstoffteilchen aus Stufe b) zu erzeugen, und mindestens einer von diesen expandierbaren Schaumstoffteilchen aus Stufe a) und diesen expandierbaren Schaumstoffteilchen aus Stufe b) mit diesem Beschichtungsstoff versehen ist, umfasst.

2. Ein Verfahren nach Anspruch 1, wobei die erste Menge an expandierbaren Schaumstoffteilchen mit dem Beschichtungsstoff versehen ist.

3. Ein Verfahren nach Anspruch 1, wobei die zweite Menge an expandierbaren Schaumstoffteilchen mit dem Beschichtungsstoff versehen ist.

4. Ein Verfahren nach Anspruch 1, wobei das physikalische Gemenge auf der Grundlage der ersten und zweiten Menge an expandierbaren Schaumstoffteilchen mit dem Beschichtungsstoff versehen ist.

5. Ein Verfahren nach einem oder mehreren der Ansprüche 1 bis 4, wobei in Stufe d) Heißluft in die Form geblasen wird oder wobei in Stufe d) Wasserdampf in die Form geblasen wird.

6. Ein Verfahren nach einem oder mehreren der Ansprüche 1 bis 5, wobei die erste Menge an expandierbaren Schaumstoffteilchen aus einer Gruppe aus auf ölbasierten Polymeren, nämlich Polystyrol (PS), Polyphenylenoxiden (PPOs), Polypropylenen (PP), Polyethylenen (PE), Polyethylenterephthalat (PET), thermoplastischem Polyurethan (TPU) und Blends davon, speziell PS/PE- und PS/PPO-Blends, ausgewählt ist.

7. Ein Verfahren nach einem oder mehreren der Ansprüche 1 bis 5, wobei die zweite Menge an expandierbaren Schaumstoffteilchen aus einer Gruppe aus biobasierten Polymeren, nämlich Polymilchsäure (PLA), Polybutyrat-Adipat-Terephthalat (PBAT), Polyhydroxyalkanoaten (PHA), Polyhydroxybutyrat (PHB), Cellulose, Stärke und Blends davon, speziell PLA/Stärke- und PLA/PBAT-Blends, ausgewählt ist, wobei insbesondere bei einem PLA/PBAT-Blend der PBAT-Anteil weniger als 75 Gew.-%, vorzugsweise weniger als 50 Gew.-%, und bevorzugter weniger als 25 Gew.-%, bezogen auf das Gesamtgewicht des PLA/PBAT-Blends, beträgt.

8. Ein Verfahren nach einem oder mehreren der Ansprüche 1 bis 7, wobei die Dichte der zweiten expandierbaren Schaumstoffteilchen in einem Bereich von 7 bis 40 kg/m³ und die Dichte der ersten expandierbaren Schaumstoffteilchen in einem Bereich von 8 bis 45 kg/m³ liegt.

9. Ein Verfahren nach einem oder mehreren der Ansprüche 1 bis 8, wobei die zweite Menge an expandierbaren Schaumstoffteilchen in einem Bereich von 2 bis 50 Gew.-%, insbesondere 5 bis 20 Gew.-%, und vorzugsweise 10 bis 15 Gew.-% auf der Basis des Gesamtgewichts des in Stufe d) erhaltenen Schaumstoffformteils vorhanden ist.

10. Ein Verfahren nach einem oder mehreren der Ansprüche 1 bis 9, wobei die erste Menge an expandierbaren Schaumstoffteilchen EPS ist und die zweite Menge an expandierbaren Schaumstoffteilchen EPLA ist, wobei die Kristallinität dieser EPLA vorzugsweise in einem Bereich von 20 bis 100 % und insbesondere in einem Bereich von 30 bis 40 % liegt und vorzugsweise diese EPLA ein PLA-Copolymer mit einem D-Gehalt von 2 bis 10 %, insbesondere von 3 bis 7 %, ist.

11. Ein Verfahren nach einem oder mehreren der Ansprüche 1 bis 10, wobei der Beschichtungsstoff aus einer Gruppe ausgewählt ist, die aus Polyurethan, Polyvinylacetat, auf Polyvinylacetat basierendem Polymer, Polyvinylalkohol, Polycaprolacton, Polyester, Polyesteramid, auf Protein basierendem Material, Polysaccharid, natürlichem Wachs oder Fett und Acrylat bzw. einer oder mehreren Kombinationen davon besteht, wobei vorzugsweise die Menge des Beschichtungsstoffs in einem Bereich von 0,5 bis 15 Gew.-% auf der Basis des Gewichts der zweiten Menge an expandierbaren Schaumstoffteilchen in dem in Stufe c) hergestellten Gemenges liegt.

12. Ein Verfahren nach einem oder mehreren der Ansprüche 1 bis 11, wobei die Teilchengröße von sowohl der ersten Menge an expandierbaren Schaumstoffteilchen als auch der zweiten Menge an expandierbaren Schaumstoffteilchen in einem Bereich von 0,5 bis 5 mm und vorzugsweise 0,5 bis 3 mm liegt.

13. Ein Verfahren nach einem oder mehreren der Ansprüche 1 bis 12, wobei in der Stufe des Sinterns unter Druck und Hitze kein zusätzliches Blähmittel verwendet wird.

14. Schaumstoffformteile, die nach Durchführung des Verfahrens nach einem oder mehreren der vorhergehenden Ansprüche erhalten worden sind, wobei die Zusammensetzung der Schaumstoffformteile auf einem gesinterten, physikalischen Gemenge aus einer ersten Menge an expandierbaren Schaumstoffteilchen und einer zweiten Menge an Schaumstoffteilchen beruht, wobei sich die chemische Herkunft der ersten Menge an expandierbaren Schaumstoffteilchen von derjenigen der zweiten Menge an Schaumstoffteilchen unterscheidet und zwischen dieser ersten und zweiten Menge an expandierbaren Schaumstoffteilchen ein Beschichtungsstoff vorhanden ist.

15. Schaumstoffformteile nach Anspruch 14, wobei die erste Menge an expandierbaren Schaumstoffteilchen aus EPS und die zweite Menge an expandierbaren Schaumstoffteilchen aus PLA besteht, wobei PLA vorzugsweise in einem Bereich von 3 bis 50 Gew.-%, insbesondere 5 bis 20 Gew.-%, und bevorzugter 10 bis 15 Gew.-%, bezogen auf das Gesamtgewicht des Schaumstoffformteils, vorhanden ist.

## Revendications

1. Procédé pour produire des pièces moulées en mousse, comprenant
a) la fourniture d'une première quantité de particules de mousse expansible ;
b) la fourniture d'une deuxième quantité de particules de mousse expansible ;
c) la préparation d'un mélange physique sur la base desdites première et deuxième quantités de particules de mousse ;
d) l'introduction du mélange de l'étape c) dans un moule et le frittage sous pression et à chaud, dans lequel l'origine chimique de la première quantité de particules de mousse expansible diffère de l'origine chimique de la deuxième quantité de particules de mousse, ledit procédé comprenant en outre la présence d'un revêtement dans ledit mélange avant ladite introduction dudit mélange dans ledit moule, dans lequel ledit revêtement est utilisé pour obtenir une bonne adhésion entre lesdites particules de mousse expansible de l'étape a) et lesdites particules de mousse expansible de l'étape b), dans lequel au moins l'une desdites particules de mousse expansible de l'étape a) et desdites particules de mousse expansible de l'étape b) est pourvue dudit revêtement.

2. Procédé selon la revendication 1, dans lequel ladite première quantité de particules de mousse expansible est pourvue dudit revêtement.

3. Procédé selon la revendication 1, dans lequel ladite deuxième quantité de particules de mousse expansible est pourvue dudit revêtement.

4. Procédé selon la revendication 1, dans lequel ledit mélange physique sur la base desdites première et deuxième quantités de particules de mousse expansible est pourvu dudit revêtement.

5. Procédé selon l'une quelconque ou plusieurs des revendications 1-4, dans lequel, à l'étape d), de l'air chaud est injecté dans le moule, ou dans lequel à l'étape d) de la vapeur d'eau est injectée dans le moule.

6. Procédé selon l'une quelconque ou plusieurs des revendications 1-5, dans lequel la première quantité de particules de mousse expansible est choisie dans le groupe des polymères à base d'huile, à savoir le polystyrène (PS), les oxydes de polyphénylène (PPO), les polypropylènes (PP), les polyéthylènes (PE), le poly(téréphtalate d'éthylène) (PET), le polyuréthane thermoplastique (TPU) et des mélanges de ceux-ci, en particulier des mélanges PS/PE et PS/PPO.

7. Procédé selon l'une quelconque ou plusieurs des revendications 1-5, dans lequel la deuxième quantité de particules de mousse expansible est choisie dans le groupe des polymères de base biologique, à savoir l'acide polylactique (PLA), le polybutylène adipate téréphtalate (PBAT), les polyhydroxyalcanoates (PHA), le polyhydroxybutyrate (PHB), la cellulose, l'amidon et des mélanges de ceux-ci, en particulier des mélanges PLA/amidon et PLA/PBAT, dans lequel en particulier dans un mélange PLA/PBAT, la quantité de PBAT est inférieure à 75% en masse, de préférence inférieure à 50% en masse, plus préférablement inférieure à 25% en masse, calculée par rapport à la masse totale dudit mélange PLA/PBAT.

8. Procédé selon l'une quelconque ou plusieurs des revendications 1-7, dans lequel la densité des deuxièmes particules de mousse expansible se situe dans la plage allant de 7 à 40 kg/m³ et la densité des premières particules de mousse expansible se situe dans la plage allant de 8 à 45 kg/m³.

9. Procédé selon l'une quelconque ou plusieurs des revendications 1-8, dans lequel la deuxième quantité de particules de mousse expansible est présente dans une plage allant de 2 à 50% en masse, en particulier de 5 à 20% en masse, de préférence de 10 à 15% en masse, par rapport à la masse totale des pièces moulées en mousse obtenues après l'étape d).

10. Procédé selon l'une quelconque ou plusieurs des revendications 1-9, dans lequel ladite première quantité de particules de mousse expansible est EPS et ladite deuxième quantité de particules de mousse expansible est EPLA, dans lequel de préférence ledit EPLA a une cristallinité se trouvant dans une plage allant de 20 à 100%, en particulier dans une plage allant de 30 à 40%, et dans lequel, de préférence, ledit EPLA est un copolymère de PLA ayant une teneur de D allant de 2 à 10%, en particulier de 3 à 7%.

11. Procédé selon l'une quelconque ou plusieurs des revendications 1-10, dans lequel ledit revêtement est choisi dans le groupe constitué par le polyuréthane, l'acétate de polyvinyle, un polymère à base d'acétate de polyvinyle, l'alcool polyvinylique, la polycaprolactone, le polyester, le polyester amide, un matériau à base de protéines, le polysaccharide, la cire naturelle ou la graisse et l'acrylate ou une ou plusieurs combinaisons de ceux-ci, dans lequel, de préférence, la quantité du revêtement se situe dans une plage allant de 0,5 à 15% en masse, par rapport à la masse de ladite deuxième quantité de particules de mousse expansible dans le mélange préparé à l'étape c).

12. Procédé selon l'une quelconque ou plusieurs des revendications 1-11, dans lequel la taille de particules à la fois de la première quantité de particules de mousse expansible et de la deuxième quantité de particules de mousse expansible se situe dans une plage allant de 0,5 à 5 mm, de préférence de 0,5 à 3 mm.

13. Procédé selon l'une quelconque ou plusieurs des revendications 1-12, dans lequel aucun agent gonflant supplémentaire n'est utilisé à ladite étape de frittage sous pression et à chaud.

14. Pièces moulées en mousse obtenues après mise en oeuvre du procédé selon l'une quelconque ou plusieurs des revendications précédentes, dans lesquelles la composition des pièces moulées en mousse est à base d'un mélange physique fritté d'une première quantité de particules de mousse expansible et d'une deuxième quantité de particules de mousse, dans lesquelles l'origine chimique de la première quantité de particules de mousse expansible diffère de l'origine chimique de la deuxième quantité de particules de mousse, dans lesquelles, un revêtement est présent entre lesdites première et deuxième quantités de particules de mousse expansible.

15. Pièces moulées en mousse selon la revendication 14, dans lesquelles ladite première quantité de particules de mousse expansible est EPS et ladite deuxième quantité de particules de mousse expansible est PLA, dans lesquelles PLA est de préférence présent dans une plage allant de 3 à 50% en masse, en particulier de 5 à 20% en masse, plus préférablement de 10 à 15% en masse, par rapport à la masse totale des pièces moulées en mousse.
